Europäisches Patentamt

European Patent Office

Office européen des brevets

(19)

(11) Publication number: **0 241 148 B1**

(12) # EUROPEAN PATENT SPECIFICATION

(45) Date of publication of patent specification: **13.11.91**   (51) Int. Cl.⁵: **G07C 1/20**, G01S 13/80

(21) Application number: **87302112.5**

(22) Date of filing: **11.03.87**

(54) **Data transfer system.**

(30) Priority: **11.03.86 GB 8605999**

(43) Date of publication of application:
**14.10.87 Bulletin 87/42**

(45) Publication of the grant of the patent:
**13.11.91 Bulletin 91/46**

(84) Designated Contracting States:
**DE FR GB IT**

(56) References cited:
**DE-A- 3 150 080**
**GB-A- 2 070 895**
**US-A- 3 440 633**
**US-A- 4 196 418**

**HASLER MITTEILUNGEN, vol. 40, no. 4, 1981,
pages 123-128, Bern, CH; R. PETERSEN
"Hasler-Personenschutzsysteme"**

(73) Proprietor: **MOTOROLA GmbH
Heinrich-Hertz-Strasse 1
W-6204 Taunusstein(DE)**

(72) Inventor: **Meyer, Wolfgang
Dotzheimer Strasse 63
W-6200 Wiesbaden(DE)**
Inventor: **Simon, Klaus
Dresdner Strasse 5E
Limburg(DE)**

(74) Representative: **Hudson, Peter David
Motorola Ltd. Patent and Licensing Oper-
ations - Europe Jays Close Viables Industrial
Estate
Basingstoke Hampshire RG22 4PD(GB)**

**Description**

This invention relates to data transfer systems, and particularly, though not exclusively, to code transfer systems.

From German Offenlegungsschrift 2453647 there is known a code transfer system in which a code is transmitted from a passive device to an active device in response to the active device transmitting to the passive device a pulsed signal. However, in this known code transfer system the signal from the active device is transmitted on a different frequency than the signal transmitted by the passive device.

From US Patent No. 4196418, there is known a detection plate for an identification system in which an active component transmits a continuous signal in a detection zone, which is coded by short-circuiting the resonant circuit of the detection plate according to a preset "rhythm". The detection plate either modifies the electromagnetic field or re-transmits at a second or even a third frequency.

It is an object cf the present invention to provide a data transfer system in which the above disadvantage may be overcome.

According to the present invention, there is provided a system for transferring a multi-element data to a first active component from a second passive component, as defined in claim 1 and a passive component for such a system, as defined in claim 6.

One code transfer system in accordance with the invention will now be described, by way of example only, with reference to the accompanying drawings, in which:

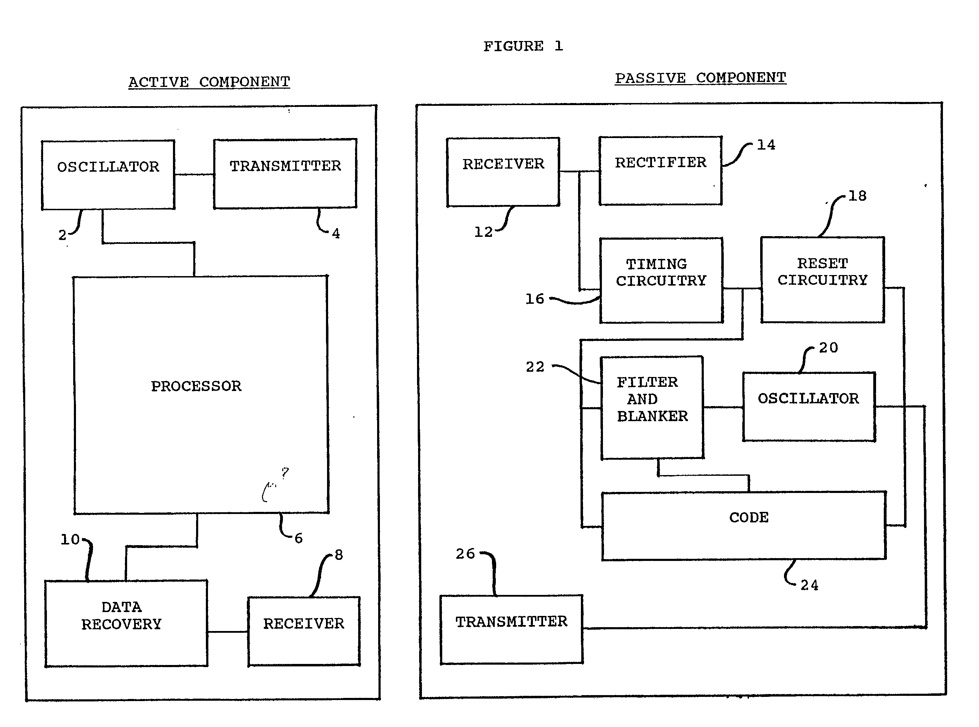

Figure 1 shows a schematic block diagram of an active component and a passive component of the system; and

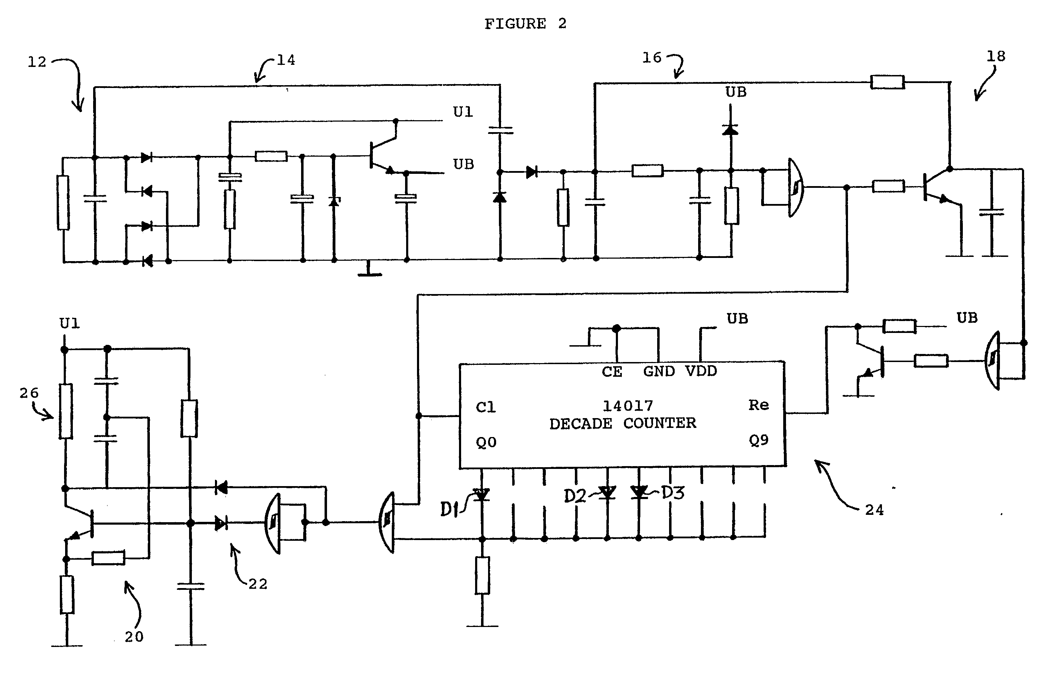

Figure 2 shows in greater detail the circuitry of the passive component of Figure 1.

Referring to the drawings, in a security system a predetermined code is transferred from a passive component to an active component. Such a ccde transfer may be required in a security system, for example, to allow a person possessing the passive component, or code box, to have access to a restricted area or to initiate a restricted operation such as re-setting an alarm.

The active component comprises an oscillator 2 and transmitter 4 controlled by a microprocessor 6, and a receiver 8 and data recovery circuitry 10 whose output is applied to the microporocessor 6.

The passive component comprises a receiver 12 and rectifier 14 and timing and reset circuitry 16 and 18. The passive component also includes an oscillator 20 and filter and blanking circuitry 22, together with code circuitry 24 and a transmitter 26.

In use, when the passive component is brought into proximity to the active component, the active component transmits an electromagnetic pulse, at a frequency of approximately 1 MHz, to the passive component. The energy in the electromagnetic pulse received by the passive component is recovered by the rectifier 14 to produce a voltage across the terminals U1, UB which activates the other circuitry in the passive component.

The pulse received by the passive component also triggers timing circuitry 16 which regenerates therefrom a clock pulse. The regenerated clock pulse is applied to the reset circuitry 18 and to both the filter and blanking circuitry 22 and to the decade counter of the code circuitry 24. The decade counter produces at the first of its outputs Qo an output signal which passes through the diode D1 and is applied to the filter and blanking circuitry 22. The clocked output of the filter and blanking circuitry 22 is applied to activate the transmitter 26 to transmit an electromagnetic pulse (of the same 1 MHz frequency as that from the active component) which is thus representative of the first element of the code defined by diodes D1, D2 and D3 of the code circuitry.

When the active component receives the electromagnetic pulse from the passive component it recovers the data (i.e. the code element) therefrom and feeds the code element to the microprocessor 6. The microprocessor stores the code element and then triggers its oscillator to cause the transmission of a further electromagnetic pulse from the active component.

Receipt of this further pulse by the passive component causes re-energisation of the passive component, and (in an analogous manner to that described above) causes the passive component to transmit an electromagnetic pulse representative of the next element of the code, as defined by the presence or absence of a diode connected to the next (Q1) output of the decade counter of the code circuitry 24. This pulse is received by the active component, the next element of the code is recovered and appended to the preceding element by the active unit, which then transmits another electromagnetic pulse.

This process continues, with the passive unit being repeatedly re-energised by each pulse received from the active component, and with the passive component sequentially transmitting pulses representative of the sequence of elements of the code as defined by the configuration of diodes connected to the outputs of the decade counter of the code circuitry 24.

Thus, it will be appreciated, transfer of the code is achieved one element at a time, with the passive component being re-energised by the active component for the transfer of each new element thereto, i.e. the transfer of the code is interleaved with the synchronising and energising pulses from the active component.

In this way the same transmission frequency can be used for transmission by both the active component and the passive component, and the passive component has no internal power source (e.g. a battery) and so can be smaller, lighter, have no need for replacement or re-charging and can be better sealed and protected against the ingress of external environmental factors such as dirt, water, etc.

The code transfer system may be used in a security system of a building in which active units are provided at predetermined locations and security personnel who must regularly visit these locations are provided with individually coded passive units.

The security personnel 'check-in' at these locations by bringing their passive code box into close proximity to the active unit (which may, for example, be wall mounted) and the passive unit's code is automatically transferred to the active unit as described above. The active units may then, for example, send the code to a central processing unit (not shown) where the code is logged, together with the time and the location of the relevant active unit.

## Claims

1. A system for transferring a multi-element data to a first active component from a second passive component, wherein

   the first component comprises: means (4) for transmitting pulses to the second component, and means (8, 10) for receiving pulses from the second component representative of elements of the data and for reconstituting the data therefrom,

   the second component comprises: means (12) for receiving pulses from the first component, and means (14) for energising the second component in response to each received pulse, from the energy therein and for transmitting (26) to the first component in response to each pulse received therefrom a pulse indicative of an element of the data,

   and wherein the pulses transmitted by the first and second components are of substantially the same frequency and the second component transmits its pulses to the first component in the times between the first component transmitting its pulses to the second component.

2. A system according to claim 1, wherein the passive component is arrange to be repeatedly re-energised by sequential pulses from the active component and is arranged to sequentially transmit pulses representative of the sequence of elements of the multi-element data.

3. A system according to claim 1 or claim 2, wherein the passive component comprises timing circuitry (16), filter and blanking circuitry (22) and a transmitter (26), wherein the timing circuitry is triggered by each pulse received from the active component and regenerates therefrom a clock pulse which is applied to the filter and blanking circuitry, wherein an element of the multi-element data is also applied to the filter and blanking circuitry and wherein the output of the filter and blanking circuitry is applied to activate the transmitter to transmit an electromagnetic pulse representative of the element of the data.

4. A system according to claim 3, wherein the passive component further comprises code circuitry (24) for defining the multi-element data and outputting it to the filter and blanking circuitry, and reset circuitry (18) for resetting the code circuitry in response to the timing circuitry.

5. A system acccording to any one of the preceding claims wherein the frequency of the transmitted pulses is approximately 1 MHz.

6. A passive component for use in a system for transferring a multi-element data from the passive component to an active component, the passive component comprising: means (12) for receiving pulses from the active component on a given frequency, and means (14) for energising the passive component in response to each received pulse, from the energy therein and for transmitting to the active component, in response to each pulse received therefrom, a pulse indicative of an element of the data,

   wherein the passive component is arranged to transmit its pulses to the active component on the same given frequency in times between the receipt of pulses from the active component.

7. A passive component according to claim 6, adapted to be repeatedly re-energised by sequential pulses from the active component and to sequentially transmit pulses representative of the sequence of elements of the multi-element data.

8. A passive component according to claim 6 or claim 7, further comprising timing circuitry (16), filter and blanking circuitry (22) and a transmitter (26), wherein the timing circuitry is triggered by each pulse received from the active component and regenerates therefrom a clock pulse which is applied to the filter and blanking circuitry, wherein an element of the multi-element data is also applied to the filter and blanking circuitry and wherein the output of the filter and blanking circuitry is applied to activate the transmitter to transmit an electromagnetic pulse representative of the element of the data.

9. A passive component according to claim 8, further comprising code circuitry (24) for defining the multi-element data and outputting it to the filter and blanking circuitry, and reset circuitry (18) for resetting the code circuitry in response to the timing circuitry.

**Revendications**

1. Système pour transférer une donnée à plusieurs éléments jusqu'à un premier composant actif à partir d'un second composant passif, dans lequel

le premier composant comprend: un moyen (4) pour transmettre des impulsions au second composant, et un moyen (8,10) pour recevoir des impulsions du second composant représentant des éléments de la donnée et pour reconstituer la donnée à partir de celles-ci,

le second composant comprend: un moyen (12) pour recevoir des impulsions du premier composant, et un moyen (14) pour exciter le second composant en réponse à chaque impulsion reçue, à partir de l'énergie contenue dans celle-ci et pour transmettre (26) au premier composant en réponse à chaque impulsion reçue de celui-ci une impulsion indiquant un élément de la donnée,

et dans lequel les impulsions transmises par les premier et second composants ont effectivement la même fréquence et le second composant transmet ses impulsions au premier composant dans les intervalles de temps entre les transmissions des impulsions du premier composant au second composant.

2. Système selon la revendication 1, dans lequel le composant passif est agencé pour être réexcité d'une façon répétitive par des impulsions séquentielles provenant du composant actif et agencé pour transmettre séquentiellement des impulsions représentant la suite des éléments de la donnée à plusieurs éléments.

3. Système selon l'une quelconque des revendications 1 et 2, dans lequel le composant passif comprend des circuits de synchronisation (16), des circuits de filtrage et d'occultation (22) et un émetteur (26), dans lequel les circuits de synchronisation sont déclenchés par chaque impulsion reçue du composant actif et régénèrent à partir de celle-ci une impulsion d'horloge qui est appliquée aux circuits de filtrage et d'occultation, dans lequel un élément de la donnée à plusieurs éléments est également appliqué aux circuits de filtrage et d'occultation et dans lequel le signal de sortie des circuits de filtrage et d'occultation est appliqué pour rendre actif l'émetteur pour l'émission d'une impulsion électromagnétique représentant l'élément de la donnée.

4. Système selon la revendication 3, dans lequel le composant passif comprend en outre des circuits de codage (24) pour définir la donnée à plusieurs éléments et la sortie vers les circuits de filtrage et d'occultation, et des circuits de remise à l'état initial (18) pour remettre à l'état initial les circuits de codage en réponse aux circuits de synchronisation.

5. Système selon l'une quelconque des revendications 1 à 4, dans lequel la fréquence des impulsions émises est égale à 1 MHz approximativement.

6. Composant passif pour servir dans un système pour le transfert d'une donnée à plusieurs éléments du composant passif à un composant actif, le composant passif comprenant: un moyen (12) pour recevoir des impulsions du composant actif sur une fréquence donnée, et un moyen (14) pour exciter le composant passif en réponse à chaque impulsion reçue, à partir de l'énergie contenue dans celle-ci et pour transmettre au composant actif, en réponse à chaque impulsion reçue de celui-ci, une impulsion indicative d'un élément de la donnée,

dans lequel le composant passif est agencé pour transmettre ses impulsions au composant actif sur la même fréquence donnée pendant les intervalles de temps entre les réceptions d'impulsions provenant du composant actif.

7. Composant passif selon la revendication 6, adapté pour être réexcité d'une façon répétitive par des impulsions séquentielles provenant du composant actif et pour émettre séquentiellement des impulsions représentant la suite des éléments de la donnée à plusieurs éléments.

8. Composant passif selon l'une quelconque des revendications 6 et 7, comprenant en outre des circuits de synchronisation (16), des circuits de filtrage et d'occultation (22) et un émetteur (26),dans lequel les circuits de synchronisation sont déclenchés par chaque impulsion reçue du composant actif et régénèrent à partir de celle-ci une impulsion d'horloge qui est appliquée aux circuits de filtrage et d'occultation, dans lequel un élément de la donnée à plusieurs éléments est également appliqué aux circuits de filtrage et d'occultation et dans lequel le signal de sortie des circuits de filtrage et d'occultation est appliqué pour rendre actif l'émetteur pour émettre une impulsion électromagnétique représentative de l'élément de la donnée.

9. Composant passif selon la revendication 8, comprenant en outre des circuits de codage (24) pour définir la donnée à plusieurs éléments et la sortir vers les circuits de filtrage et d'occultation, et des circuits de remise à l'état initial (18) pour remettre à l'état initial les circuits de codage en réponse aux circuits de synchronisation.

**Patentansprüche**

1. System zur Übertragung von aus zahlreichen Elementen zusammengesetzten Daten von einer zweiten passiven Komponente zu einer ersten aktiven Komponente, bei dem die erste Komponente die folgenden Bestandteile enthält:

   Hilfsmittel (4) zur Übertragung von Impulsen zu der zweiten Komponente und Hilfsmittel (8, 10) zum Empfang von Impulsen, die die Elemente der Daten darstellen, aus der zweiten Komponente und zur Wiederherstellung der Daten aus diesen Impulsen,

   bei dem die zweite Komponente die folgenden Bestandteile enthält:

   Hilfsmittel (12) zum Empfang von Impulsen aus der ersten Komponente,

   Hilfsmittel (14) zur Erregung der zweiten Komponente bei jedem empfangenen Impuls aus der darin vorhandenen Energie und weitere Hilfsmittel (26) zur Übertragung eines ein Datenelement angebenden Impulses zu der ersten Komponente bei jedem aus ihr empfangenen Impuls, und

   bei dem die von der ersten und zweiten Komponente übertragenen Impulse im wesentlichen dieselbe Frequenz aufweisen und die zweite Komponente ihre Impulse zu der ersten Komponente in Zeitabschnitten zwischen der ersten Komponente überträgt, die ihre Impulse zu der zweiten Komponente überträgt.

2. System gemäß Anspruch 1, bei dem die passive Komponente derart angeordnet ist, daß sie von den nachfolgenden Impulsen aus der aktiven Komponente erneut erregt wird und anschließend Impulse überträgt, die die Folge der Elemente der aus zahlreichen Elementen zusammengesetzten Daten darstellen.

3. System gemäß Anspruch 1 oder Anspruch 2, bei dem die passive Komponente eine Zeitgabeschaltung (16), ein Filter, eine Austastschaltung (22) und einen Sender (26) enthält, bei dem die Zeitgabeschaltung von jedem aus der aktiven Komponente empfangenen Impuls ausgelöst wird und daraus wieder einen Taktpuls erzeugt, der dem Filter und der Austastschaltung zugeführt wird, bei dem ein Element der aus zahlreichen Elementen zusammengesetzten Daten außerdem dem Filter und der Austastschaltung zugeführt wird, und bei der die Ausgangssignale des Filters und der Austastschaltung zur Aktivierung des Senders angelegt werden, um einen das Datenelement darstellenden, elektromagnetischen Impuls zu übertragen.

4. System gemäß Anspruch 3, bei dem die passive Komponente ferner eine Codierschaltung (24) zum Bestimmen der aus zahlreichen Elementen zusammengesetzten Daten und zu ihrer Ausgabe an das Filter und die Austastschaltung und eine Rückstellschaltung (18) enthält, um die Codierschaltung in Reaktion auf die Zeitgabeschaltung rückzustellen.

5. System gemäß einem der vorhergehenden Ansprüche, bei der die Frequenz der übertragenen Impulse annähernd 1 MHz beträgt.

6. Passive Komponente für eine Verwendung in einem System zur Übertragung von aus zahlreichen Elementen zusammengesetzten Daten von ihr zu einer aktiven Komponente, wobei sie Hilfsmittel (12) zum Empfang von Impulsen auf einer gegebenen Frequenz aus der aktiven Komponente und Hilfsmittel (14) enthält, um die passive Komponente in Abhängigkeit von jedem empfangenen Impuls mit der darin vorhandenen Energie zu erregen und einen ein Datenelement angebenden Impuls in Abhängigkeit von jedem daraus empfangenen Impuls zu der aktiven Komponente zu übertragen,

   und wobei die passive Komponente so angeordnet ist, daß sie ihre Impulse zu der aktiven Komponente auf derselben gegebenen Frequenz zu den Zeiten zwischen dem Empfang von Impulsen aus der aktiven Komponente überträgt.

7. Passive Komponente gemäß Anspruch 6, die von aufeinanderfolgenden Impulsen aus der aktiven Komponente erneut erregbar ist, um nacheinander Impulse zu übertragen, die die Elementenfolge der aus mehreren Elementen zusammengesetzten Daten darstellen.

8. Passive Komponente gemäß Anspruch 6 oder Anspruch 7, ferner mit einer Zeitgabeschaltung (16), einem Filter, einer Austastschaltung (22) und einem Sender (26), bei der die Zeitgabeschaltung von jedem aus der aktiven Komponente empfangenen Impuls ausgelöst wird und daraus wieder einen Taktpuls erzeugt, welcher dem Filter und der Austastschaltung zugeführt wird, bei der ein Element der aus mehreren Elementen zusammengesetzten Daten außerdem dem Filter und der Austastschaltung zugeleitet wird, und bei der die Ausgangssignale des Filters und der Austastschaltung zur Erregung des Senders zugeführt werden, um einen elektromagnetischen Impuls zu übertragen, der ein Datenelement darstellt.

9. Passive Komponente gemäß Anspruch 8, ferner mit einer Codierschaltung (24) zum Bestimmen der aus zahlreichen Elementen zusammengesetzten Daten und zu ihrer Ausgabe an das Filter und die Austastschaltung und mit einer Rückstellschaltung (18) zum Rückstellen der Codierschaltung in Abhängigkeit von der Zeitgabeschaltung.

FIGURE 1

PASSIVE COMPONENT

ACTIVE COMPONENT

FIGURE 2

EP 0 241 148 B1